# EUROPÄISCHE PATENTANMELDUNG

(11) **EP 1 709 865 A1**
(43) Veröffentlichungstag der Anmeldung: **11.10.2006**
(21) Anmeldenummer: 05007342.8
(22) Anmeldetag: 05.04.2005
(51) Int. Cl.: A01G 27/04

(54) **Tonkeramiksockel zur Bewässerung von Topfpflanzen**

(71) Anmelder: Leichte, Walter, 88138 Hergensweiler (DE)
(72) Erfinder: Leichte, Walter, 88138 Hergensweiler (DE)

(57) **Zusammenfassung**

Die Erfindung betrifft den Einsatz eines Tonkeramiksockels (1) zur selbsttätigen Bewässerung von Topfplanzen.

Durch eine, gemäß dieser Erfindungsmeldung ausgeführten Form und Verarbeitung eines Tonkeramiksockels (1) kann eine Topfplanze über einen Zeitraum von mehreren Wochen mit Wasser versorgt werden.

Das hier beschriebene Verfahren beruht darauf, dass eine Tonkeramik teilweise im Wasser steht. Durch die Kapillarwirkung der Tonkeramik verteilt sich das Wasser auf die ganze Tonkeramik, d.h. auch auf den Teil, der über dem Wasser liegt. Die Pflanzenerde und die Wurzeln der Pflanze, die mit der Tonkeramik in Kontakt stehen, nehmen dann die Feuchtigkeit von der Tonkeramik auf.

Der Einsatz eines Tonkeramiksockels (1) zur Bewässerung von Topfplanzen weist den Vorteil auf, dass sie einfach zu realisieren und damit preiswert ist. Auch ist sie funktionssicher, da kein Docht, Gips oder Schlauch vorhanden ist, der bei Beschädigung die Wasserzufuhr unterbrechen kann.

## Beschreibung

Bei den meisten Topfpflanzen darf die Wurzel nicht über einen längeren Zeitraum im Wasser stehen. So müssen Topfpflanzen regelmäßig manuell gegossen werden oder über eine automatische Bewässerung verfügen.

Verschiedene Systeme sind hier bekannt. Die meisten besitzen einen zweiten Wasserbehälter, aus dem über eine Wasserpumpe oder über ein physikalisches Wirkprinzip, Wasser in die Pflanzenerde eingebracht wird.

Diese Systeme sind in der Regel aufwendig und damit zu teuer, um sie bei einzelnen Zimmerpflanzen einzusetzen. Auch sind, durch den Einsatz eines zweiten Wasserbehälters, Einschränkungen im Design gegeben.

Bei anderen Systemen wird unter der Pflanzenerde befindliches Wasser z.B. über einen Docht und mit Hilfe der Kapillarwirkung über eine Bodenplatte in die Pflanzenerde gebracht. Solche Systeme werden z.B. in Balkonblumenkästen eingesetzt.

Das hier beschriebene Verfahren beruht darauf, dass eine Tonkeramik teilweise im Wasser steht. Durch die Kapillarwirkung der Tonkeramik verteilt sich das Wasser auf die ganze Tonkeramik, d.h. auch auf den Teil, der über dem Wasser liegt. Die Pflanzenerde und die Wurzeln der Pflanze, die mit der Tonkeramik in Kontakt stehen, nehmen dann die Feuchtigkeit von der Tonkeramik auf.

Die Kapillarwirkung der Tonkeramik entsteht durch die poröse Struktur von Tonkeramik. Die Tonkeramik kann aus Ton oder auch aus gemagertem Ton gebrannt werden. Um eine ausreichend hohe Kapillarwirkung zu erreichen, sollte die Temperatur beim Brand nicht über 1100°C liegen. Damit wird eine Sinterung der Irdenware verhindert und die Porösität des Steinguts bleibt erhalten. Auch kann zur Verbesserung des Kapillarwirkung die Oberfläche der Tonkeramik nach dem Brand teilweise aufgerauht werden, weil die Oberfläche durch den Brand geschlossen wird. Die Kapillarwirkung kann auch durch Zusätze wie Sand und Fasern verbessert werden.

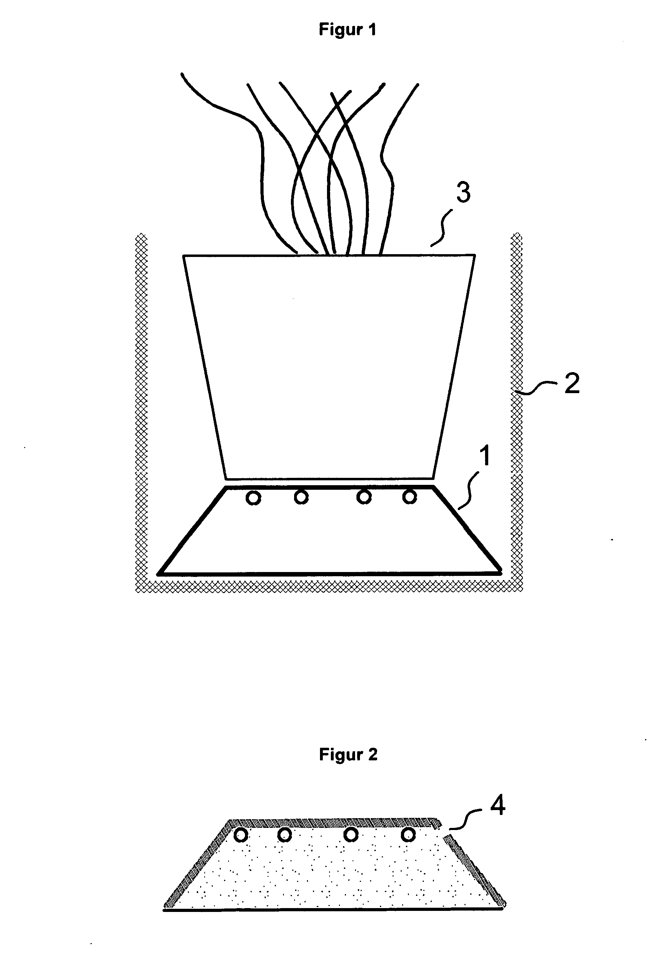

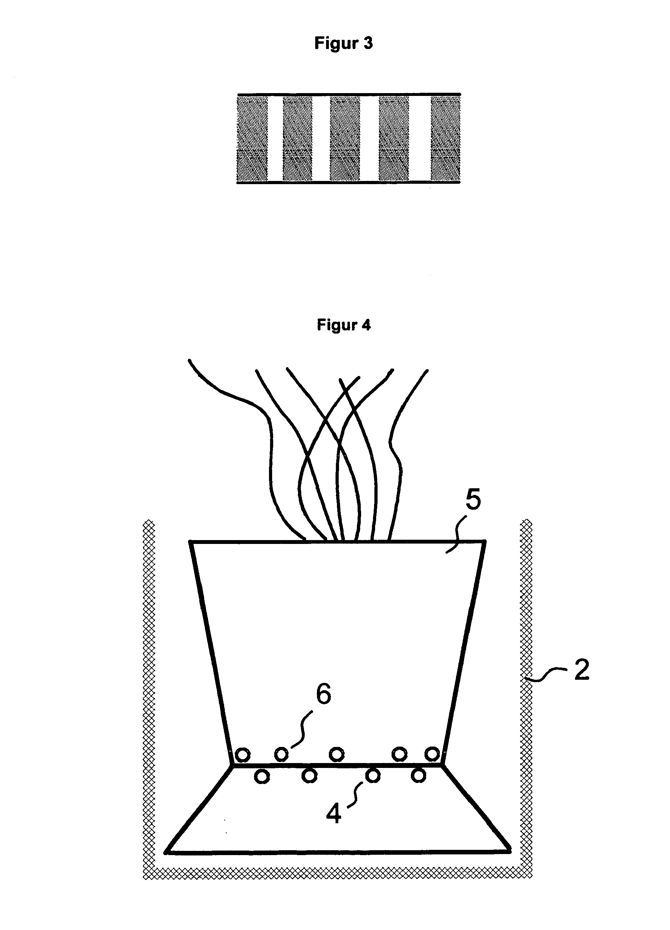

Die Tonkeramik kann als Sockel ausgeführt sein, auf dem der Pflanzentopf steht. Die Form des Sockels entspricht idealerweise einer umgedrehten Schale (Figur 2). Dadurch befindet sich der Sockel immer in der Mitte des Übertopfs, verdrängt wenig Wasser und hat eine hohe Standfestigkeit. Der Sockel kann aber auch massiv sein oder auch eine Rippen- oder Gitterstruktur aufweisen, wie z.B. ein Ziegelstein (Figur 3).

Bei frisch umgetopften Pflanzen ragen keine Wurzeln aus dem Topf. Hier können als Koppelglied für den Wassertransport von Tonkeramiksockel zu Pflanzentopf z.B. Kokosfasern eingesetzt werden. Sie werden zwischen Pflanzentopf und Tonkeramiksockel eingelegt.

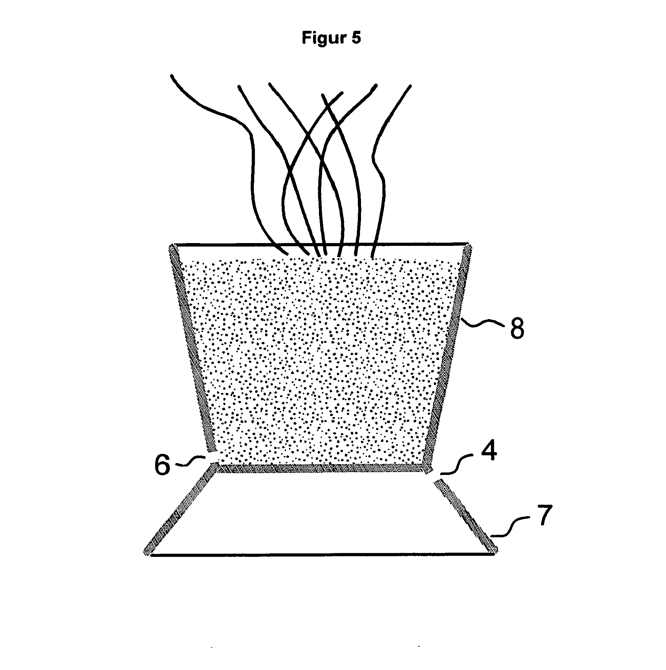

Die Tonkeramik kann auch als Pflanzentopf mit Sockel ausgeführt sein, der mit seinem Sockel im Wasser steht (Figur 4 und 5). Pflanzentopf und Sockel sind dabei aus einem Stück gefertigt.

Das erfindungsgemäße Verfahren weist den Vorteil auf, dass es preiswert ist, weil außer der, für Pflanzentöpfe gebräuchlichen, Tonkeramik keine zusätzlichen Werkstoffe erforderlich sind. Auch ist es funktionssicher, da kein Docht, Gips oder Schlauch vorhanden ist, der bei Beschädigung die Wasserzufuhr unterbrechen kann.

Figur 1 zeigt eine dieser Erfindung gemäßen Anordnung einer Tonkeramik als Sockel, auf dem der Pflanzentopf steht, in einer Schnittdarstellung des Übertopfs. Der Tonkeramiksockel 1 (Figur 1) steht beispielsweise in einem Übertopf 2 (Figur 1). Auf dem Tonkeramiksockel steht der Pflanzentopf 3 (Figur 1), indem sich die Pflanzenerde befindet.

Figur 2 zeigt ein dieser Erfindung gemäß gestalteter Sockel in der Schnittdarstellung. Im Tonkeramiksockel sind Löcher 4 (Figur 2) eingelassen, um den Hohlraum beim Nachgießen zu entlüften.

Figur 3 zeigt einen alternativ gestalteten Sockel in Rippenstruktur. Durch seine in der Figur 1, 2 und 3 dargestellten Formen hält der Sockel den Pflanzentopf 3 (Figur 1) mit den Wurzeln über dem Wasser.

Figur 4 zeigt einen Pflanzentopf mit Sockel, der mit seinem Sockel im Wasser steht, in einer Schnittdarstellung des Übertopfs. Der Pflanzentopf mit Sockel 5 (Figur 4) steht beispielsweise in einem Übertopf 2 (Figur 4).

Figur 5 zeigt einen Pflanzentopf mit Sockel in der Schnittdarstellung. Das Tonkeramikgefäß besteht aus einem Pflanzentopf 8 (Figur 5), indem sich die Pflanzenerde befindet und einem Sockel 7 (Figur 5). Im Sockel erfolgt der Feuchtetransport zu dem Pflanzentopf. Durch seine in der Figur 4 und 5 dargestellten Form wird die Pflanzenerde mit den Wurzeln über dem Wasser gehalten. Durch seinen nach unten geweiteten Konus wird die Standfestigkeit verbessert.

Am Pflanzentopf sind unten Löcher 6 (Figur 4 und 5) eingelassen, um das Wasser, das in den Pflanzentopf gegossen wird, abfließen zu lassen. Die Löcher sind außen angebracht, damit das Tageslicht das Rauswachsen der Wurzeln aus dem Behälter verzögert. Am Sockel sind oben Löcher 4 (Figur 4 und 5) eingelassen, um den Hohlraum im Sockel beim Nachgießen zu entlüften.

## Patentansprüche

1. Patentanspruch auf ein System zur selbsttätigen Bewässerung von Topfpflanzen, **dadurch gekennzeichnet,**
**dass** es aus Tonkeramik besteht und in Wasser getaucht ist und durch die Kapillarwirkung das Wasser auf den über ihn befindlichen Pflanzentopf überträgt.
wie Anspruch 1, jedoch Tonkeramik aus gemagertem Ton gebrannt
wie Anspruch 1 und 2, jedoch Tonkeramik mit Zusätzen wie Sand und
Fasern
wie Anspruch 1, jedoch mit Löcher oben im Tonkeramiksockel und mit Löcher unten im Pflanzentopf
wie Anspruch 1, jedoch mit Fasern zwischen Tonkeramiksockel und
Pflanzentopf zur Unterstützung des Wassertransports
wie Anspruch 1, jedoch dass Pflanzentopf und Sockel aus einem Stück bestehen
